# EUROPEAN PATENT APPLICATION

(11) **EP 4 779 296 A1**
(43) Date of publication of application: **22.07.2026**
(21) Application number: 24876707.1
(22) Date of filing: 12.10.2024
(51) Int. Cl.: G01N 21/65, G01N 21/01

(54) **TIME-DOMAIN-BASED STIMULATED RAMAN SCATTERING METHOD AND SYSTEM**

(30) Priority: 13.10.2023 CN 202311329683
(71) Applicant: Peking University, Beijing 100871 (CN)
(72) Inventor: XIONG, Hanqing, Beijing 100871 (CN); YU, Qiaozhi, Beijing 100871 (CN)
(74) Representative: Raffay & Fleck
(86) International application number: PCT/CN2024/124550
(87) International publication number: WO 2025/077902

(57) **Abstract**

A time-domain-based stimulated Raman scattering method and system. In the method, a pump pulse or a Stokes pulse is modulated, and two pairs of stimulated Raman excitation pulses having an adjustable relative delay are introduced, such that a sample to be tested is excited to generate transient stimulated Raman scattering, so that transient stimulated Raman scattering signals can be obtained. Therefore, hyperspectral data collection covering hundreds of wave numbers can be realized simply by means of single excitation, and the characteristic of high temporal resolution is realized. Moreover, by means of the method, a spectral resolution at a vibrational-energy-level broadening limit can be obtained, and the main technical bottlenecks faced by conventional stimulated Raman scattering spectrum techniques can be solved all at once. The method can be used in the fields of Raman scattering imaging and spectrum detection, related Raman probes, etc.

## Description

### CROSS-REFERENCES TO RELATED APPLICATIONS

The present application claims priority to Chinese Patent Application No. 202311329683.0, filed on October 13, 2023, entitled "Time-domain-based Stimulated Raman Scattering Method and System", which is hereby incorporated by reference in its entirety.

### FIELD

The present application relates to the technical fields of spectral detection and optical imaging, in particular to a time-domain stimulated Raman scattering method and system.

### BACKGROUND

Raman spectrum is a powerful tool for analyzing molecular structures. Raman spectrum contains rich information about the structures of sample molecules and may be used to analyze the dynamics of sample molecules and interactions with solvent environments, which is widely used in the study of molecular reaction processes in biology, chemistry, etc.

Most of the existing stimulated Raman spectrum techniques are frequency-domain-based methods, including:
(1) The method of point-by-point laser tuning using narrowband picosecond lasers, which often requires minute-level spectrum collecting time to obtain a complete Raman spectrum, with poor temporal resolution; and
(2) By using the femtosecond laser spectrum focusing method, the spectrum is obtained by adjusting the relative delay of the pulses, in which the spectral linewidth of the Raman spectrum obtained is significantly broadened compared to that of a spontaneous Raman spectrum. When different Raman peaks are relatively close, it is often difficult to distinguish them, and the spectral resolution is poor.

### BRIEF SUMMARY

The present application provides a time-domain-based stimulated Raman scattering method and system for addressing a defect existing in the prior art.

The present application provides a time-domain-based stimulated Raman scattering method, including:
generating a pump pulse and a Stokes pulse based on a femtosecond pulse laser, selecting a first pulse from one of the pump pulse and the Stokes pulse and modulating the first pulse by a modulator to obtain a modulated pulse, and aligning a second pulse from the other of the pump pulse and the Stokes pulse with the modulated pulse in both temporal and spatial dimensions to obtain a stimulated Raman excitation pulse pair;
generating, based on the stimulated Raman excitation pulse pair, two stimulated Raman excitation pulse pairs with a relative delay, where the relative delay is adjustable; and
scanning, based on the two stimulated Raman excitation pulse pairs, the relative delay to excite a sample to be tested to generate transient stimulated Raman scattering, obtaining transient stimulated Raman scattering signals corresponding to each relative delay, and determining, based on the transient stimulated Raman scattering signals, a Raman spectrum corresponding to the sample to be tested.

According to the time-domain-based stimulated Raman scattering method of the present application, in case that the first pulse is the pump pulse, the transient stimulated Raman scattering signals are stimulated Raman gain signals; or
in case that the first pulse is the Stokes pulse, the transient stimulated Raman scattering signals are stimulated Raman loss signals.

According to the time-domain-based stimulated Raman scattering method of the present application, where scanning, based on the two stimulated Raman excitation pulse pairs, the relative delay to excite the sample to be tested to generate the transient stimulated Raman scattering, obtaining the transient stimulated Raman scattering signals corresponding to each relative delay, and determining, based on the transient stimulated Raman scattering signals, the Raman spectrum corresponding to the sample to be tested includes:
scanning, based on the two stimulated Raman excitation pulse pairs, the relative delay to excite the sample to be tested to generate the transient stimulated Raman scattering, and obtaining emergent excitation pulse pairs that have interacted with the sample to be tested;
performing photoelectric conversion and lock-in detection on the second pulses of the emergent excitation pulse pairs to obtain the transient stimulated Raman scattering signals; and
performing a Fourier transform on the transient stimulated Raman scattering signals to obtain the Raman spectrum.

According to the time-domain-based stimulated Raman scattering method of the present application, where subsequent to determining, based on the transient stimulated Raman scattering signals, the Raman spectrum corresponding to the sample to be tested, the method further includes:
obtaining, based on the Raman spectrum corresponding to each excited position on the sample to be tested, a Raman image corresponding to the sample to be tested.

The present application further provides a time-domain-based stimulated Raman scattering system, including: a femtosecond laser light source, a modulator, an auxiliary alignment component, a delay scanning device and a signal collecting device;
where the femtosecond laser light source is used to generate a pump pulse and a Stokes pulse based on a femtosecond pulse laser;
the modulator is used to modulate a first pulse from one of the pump pulse and the Stokes pulse;
the auxiliary alignment component is used to align the modulated pulse with a second pulse from the other of the pump pulse and the Stokes pulse in both temporal and spatial dimensions to obtain a stimulated Raman excitation pulse pair;
the delay scanning device is used to generate, based on the stimulated Raman excitation pulse pair, two stimulated Raman excitation pulse pairs with a relative delay, where the relative delay is adjustable, and the two stimulated Raman excitation pulse pairs are used to excite a sample to be tested to generate transient stimulated Raman scattering; and
the signal collecting device is used to collect emergent excitation pulse pairs that have interacted with the sample to be tested, the emergent excitation pulse pairs being obtained after the sample to be tested generates the transient stimulated Raman scattering; obtain transient stimulated Raman scattering signals based on the emergent excitation pulse pairs; and determine a Raman spectrum corresponding to the sample to be tested based on the transient stimulated Raman scattering signals.

According to the time-domain-based stimulated Raman scattering system of the present application, the system further includes a galvanometer system, where the galvanometer system is provided between the delay scanning device and the signal collecting device.

According to the time-domain-based stimulated Raman scattering system of the present application, where the signal collecting device includes a condenser element, a filter element, a photoelectric detection element, a lock-in amplifier and a data acquisition card;
the condenser element is used to collect the emergent excitation pulse pairs;
the filter element is used to filter out the first pulses in the emergent excitation pulse pairs;
the photoelectric detection element is used to detect light intensity signals of the second pulses in the emergent excitation pulse pairs;
the lock-in amplifier is used to perform a lock-in detection of the light intensity signal and demodulate the transient stimulated Raman scattering signals from the light intensity signal; and
the data acquisition card is used to collect the transient stimulated Raman scattering signals and determine the Raman spectrum based on the transient stimulated Raman scattering signals.

According to the time-domain-based stimulated Raman scattering system of the present application, where the delay scanning device includes an interferometer;
where a moving arm of the interferometer includes a delay control structure, and the delay control structure includes a first reflection element, a second reflection element and a third reflection element;
a reflection surface of the first reflection element and a reflection surface of the second reflection element are parallel and opposite to each other, and the third reflection element is provided on a reflection light path of the second reflection element;
the first reflection element and the second reflection element are configured to rotate synchronously in a same direction; and
the third reflection element is used to deflect light beams on the reflection light path of the second reflection element and reflect it onto the second reflection element, and the light beams are output in sequence after passing through the second reflection element and the first reflection element.

According to the time-domain-based stimulated Raman scattering system of the present application, where the third reflection element includes a first reflection part and a second reflection part, and a reflection surface of the first reflection part is perpendicular to a reflection surface of the second reflection part; and the light beams on the reflection light path of the second reflection element are deflected by the first reflection part and the second reflection part in sequence and then reflected onto the second reflection element; or,
the third reflection element includes three mutually perpendicular reflection surfaces, and the light beams on the reflection light path of the second reflection element are deflected by the three reflection surfaces in sequence and then reflected onto the second reflection element.

According to the time-domain-based stimulated Raman scattering system of the present application, where a delay caused by the delay control structure to an incident light is determined based on: rotation angles of the first reflection element and second reflection element, a distance between the first reflection element and second reflection element in a propagation direction of the incident light, included angles formed by the first reflection element and the second reflection element respectively with the propagation direction of the incident light, and an offset of a rotation axis of the first reflection element relative to the propagation direction of the incident light.

According to the time-domain-based stimulated Raman scattering system of the present application, where a range of the rotation angle is -1° to 4°, the distance is 40mm, the included angles are 75°, the offset is 5mm, and the delay control structure generates a delay range of 0 to 12ps for the incident light.

According to the time-domain-based stimulated Raman scattering system of the present application, the incident light is an ultrafast pulse laser or any collimated beam.

According to the time-domain-based stimulated Raman scattering system of the present application, where the delay control structure further includes a first drive device and a second drive device;
the first drive device is used to drive the first reflection element to rotate; and
the second drive device is used to drive the second reflection element to rotate.

According to the time-domain-based stimulated Raman scattering system of the present application, the system further includes: a controller, where the controller is connected to the first drive device and the second drive device, respectively; and
the controller is configured to control continuous rotation of the first drive device and the second drive device, to scan the rotation angles of the first reflection element and second reflection element, achieving delay scanning.

According to the time-domain-based stimulated Raman scattering system of the present application, the interferometer further includes a beam splitter and a reference signal detection device;
the beam splitter is used to divide a target beam of the stimulated Raman excitation pulse pair obtained through the auxiliary alignment component into a first part beam and a second part beam, where the first part beam is transmitted along the moving arm of the interferometer, and the second part beam is transmitted along a fixed arm of the interferometer;
the beam splitter is also used to combine a beam output from the moving arm of the interferometer with a beam output from the fixed arm of the interferometer to obtain a third part beam and a fourth part beam, respectively, where the third part beam is used to excite the sample to be tested to generate the transient stimulated Raman scattering; and
the reference signal detection device is used to receive the fourth part beam and convert the fourth part beam into a reference signal with a coherence time greater than a preset threshold, where the reference signal is used to calibrate position information of the delay control structure.

According to the time-domain-based stimulated Raman scattering system of the present application, where the reference signal detection device includes a grating, a lens, a slit and a photodiode;
the fourth part beam passes through the grating, the lens and the slit in sequence to obtain the reference signal; and
the photodiode is used to detect the reference signal.

According to the time-domain-based stimulated Raman scattering system of the present application, where the femtosecond laser light source includes a femtosecond laser, a polarization splitter, a first light source branch and a second light source branch;
the femtosecond laser is used to generate the femtosecond pulse laser; the polarization splitter is used to divide the femtosecond pulse laser into a fifth part beam and a sixth part beam;
the first light source branch includes a dispersion compensation device, where the dispersion compensation device is used to perform dispersion compensation on the fifth part beam to obtain the Stokes pulse; and
the second light source branch includes a frequency doubler and an optical parametric oscillator, where the frequency doubler is used to double the sixth part beam to obtain a frequency-doubled laser; and the optical parametric oscillator is driven by the frequency-doubled laser, and outputs the pump pulse.

According to the time-domain-based stimulated Raman scattering system of the present application, the auxiliary alignment component includes an adjustable optical delay line on the second light source branch, and a dichroic mirror on the first light source branch and the second light source branch;
the optical delay line is used to apply a delay to the pump pulse to align the pump pulse with the Stokes pulse in the temporal dimension; and
the dichroic mirror is used to align the pump pulse with the Stokes pulse in the spatial dimension.

The present application provides a time-domain-based stimulated Raman scattering method and system, the method includes: first, generating a pump pulse and a Stokes pulse based on a femtosecond pulse laser, selecting a first pulse from one of the pump pulse and the Stokes pulse and modulating the first pulse by a modulator to obtain a modulated pulse, and aligning a second pulse from the other of the pump pulse and the Stokes pulse with the modulated pulse in both temporal and spatial dimensions to obtain a stimulated Raman excitation pulse pair; then, generating, based on the stimulated Raman excitation pulse pair, two stimulated Raman excitation pulse pairs with a relative delay, where the relative delay is adjustable; and finally, scanning, based on the two stimulated Raman excitation pulse pairs, the relative delay to excite a sample to be tested to generate transient stimulated Raman scattering, obtaining transient stimulated Raman scattering signals corresponding to each relative delay, and determining, based on the transient stimulated Raman scattering signals, a Raman spectrum corresponding to the sample to be tested. By modulating the first pulse and adopting two stimulated Raman excitation pulse pairs with an adjustable relative delay to excite the sample to be tested to generate transient stimulated Raman scattering, transient stimulated Raman scattering signals may be obtained, and hyperspectral data collection covering hundreds of wavenumbers may be achieved with only a single excitation, achieving high temporal resolution. At the same time, the spectral resolution of the vibrational energy level at lifetime broadening limit may be achieved through the method, which may solve the main technical bottleneck faced by traditional stimulated Raman scattering spectrum techniques one time. The method may be used in areas such as Raman scattering imaging and spectral detection, as well as related Raman probes.

### BRIEF DESCRIPTION OF THE DRAWINGS

In order to clearly illustrate the solutions according to the embodiments of the present application, the accompanying drawings used in the description of the embodiments are briefly introduced below. It should be noted that the drawings in the following description are only some embodiments of the present application. For those of ordinary skill in the art, other drawings may be obtained according to these drawings without creative efforts.
FIG. 1 is a first schematic flowchart of a time-domain-based stimulated Raman scattering method according to the present application;
FIG. 2 is an excitation energy level diagram of a sample to be tested excited by stimulated Raman excitation pulse pairs in the time-domain-based stimulated Raman scattering method according to the present application;
FIG. 3 is a second schematic flowchart of the time-domain-based stimulated Raman scattering method according to the present application;
FIG. 4 is a third schematic flowchart of the time-domain-based stimulated Raman scattering method according to the present application;
FIG. 5 is a first structural diagram of a time-domain-based stimulated Raman scattering system according to the present application;
FIG. 6 is a second structural diagram of the time-domain-based stimulated Raman scattering system according to the present application;
FIG. 7 is a schematic diagram of transient stimulated Raman scattering signals obtained in the time-domain-based stimulated Raman scattering system according to the present application, with a sample to be tested being a DMSO molecule and a first pulse being a Stokes pulse;
FIG. 8 is a schematic diagram of a Raman spectrum corresponding to the sample to be tested in the time-domain-based stimulated Raman scattering system according to the present application, with the sample to be tested being a DMSO molecule and the first pulse being a Stokes pulse;
FIG. 9 is a first schematic diagram of a delay control structure of the time-domain-based stimulated Raman scattering system according to the present application;
FIG. 10 is a second schematic diagram of the delay control structure of the time-domain-based stimulated Raman scattering system according to the present application;
FIG. 11 is a third schematic diagram of the delay control structure of the time-domain-based stimulated Raman scattering system according to the present application;
FIG. 12 is a schematic diagram of rotation angles of a first reflection element and a second reflection element in the delay control structure of the time-domain-based stimulated Raman scattering system according to the present application;
FIG. 13 is a schematic diagram of a correspondence between a delay of an incident light generated by the delay control structure and the rotation angles of the first reflection element and second reflection element in the time-domain-based stimulated Raman scattering system according to the present application;
FIG. 14 is a fourth schematic diagram of the delay control structure of the time-domain-based stimulated Raman scattering system according to the present application;
FIG. 15 is a schematic diagram of an imaging result of the time-domain-based stimulated Raman scattering system according to the present application; and
FIG. 16 is a schematic diagram of a spectrum reconstructed from the imaging result in FIG. 15.

### DETAILED DESCRIPTION

To make the objectives, solutions, and advantages of the present application clearer, the solutions according to the present application are clearly and completely described below in combination with the accompanying drawings in the embodiments of the present application. It should be noted that the described embodiments are some embodiments of the present application, rather than all the embodiments. Based on the embodiments of the present application, all other embodiments obtained by those of ordinary skill in the art without creative effort are within the scope of protection of the present application.

The terms "first" and "second" in the description and claims of the present application may explicitly or implicitly include one or more of the features. In the description of the present application, unless otherwise specified, "multiple" means two or more. Additionally, in the description and claims, "and/or" indicates at least one of the connected objects, and the character "/", generally represents an "or" relationship between the preceding and following associated objects.

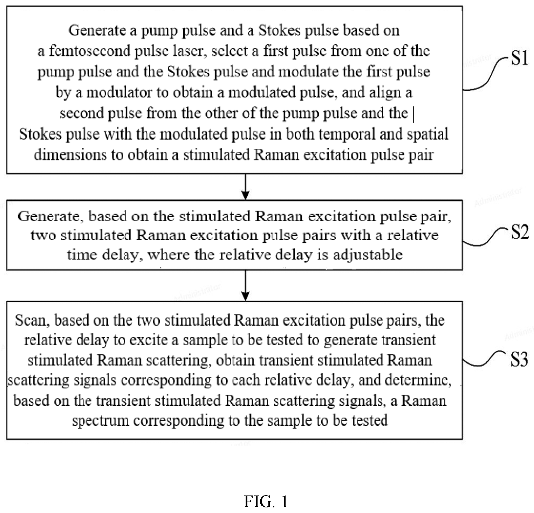

FIG. 1 is a schematic flowchart of a time-domain-based stimulated Raman scattering method according to an embodiment of the present application. As shown in FIG. 1, the method includes the following steps.

S1, generating a pump pulse and a Stokes pulse based on a femtosecond pulse laser, selecting a first pulse from one of the pump pulse and the Stokes pulse and modulating the first pulse by a modulator to obtain a modulated pulse, and aligning a second pulse from the other of the pump pulse and the Stokes pulse with the modulated pulse in both temporal and spatial dimensions to obtain a stimulated Raman excitation pulse pair.

S2, generating, based on the stimulated Raman excitation pulse pair, two stimulated Raman excitation pulse pairs with a relative delay, where the relative delay is adjustable.

S3, scanning, based on the two stimulated Raman excitation pulse pairs, the relative delay to excite a sample to be tested to generate transient stimulated Raman scattering, obtaining transient stimulated Raman scattering signals corresponding to each relative delay, and determining, based on the transient stimulated Raman scattering signals, a Raman spectrum corresponding to the sample to be tested.

Specifically, the time-domain-based stimulated Raman scattering method in the embodiments of the present application may be implemented through a time-domain-based stimulated Raman scattering system.

First, step S1 is performed, in which a femtosecond pulse laser is used to generate a pump pulse and a Stokes pulse. The pump pulse and the Stokes pulse may be generated by one light source, for example, by one femtosecond laser light source. A stimulated Raman excitation pulse pair may include a pump pulse and a Stokes pulse that are aligned in both temporal and spatial dimensions and generated by the femtosecond pulse laser. The femtosecond laser light source may include a femtosecond laser that may be used to generate the femtosecond pulse laser.

Furthermore, the pump pulse and Stokes pulse may also be generated separately by different light sources, which is not limited here.

The pump pulse may be a femtosecond pulse signal with tunable wavelengths in the range of 800 nm to 900 nm, and the Stokes pulse may be a femtosecond pulse signal with tunable wavelengths in the range of 1020 nm to 1050 nm. The beams corresponding to the pump pulse and Stokes pulse may both be wideband femtosecond pulse lasers.

One of the pump pulse and the Stokes pulse may be selected as a first pulse for pulse modulation to obtain the modulated pulse. The first pulse may be either the pump pulse or the Stokes pulse, and the modulation process may be achieved through the modulator. The modulator may be an electro-optic modulator (EOM), which may control the power, phase, polarization and other attribute information of the first pulse through an electronic control signal. In addition, the modulator may be an acousto-optic modulator, or any other type of modulator.

It should be understood that the pulse that needs to be modulated between the pump pulse and the Stokes pulse is the first pulse, and the other pulse that does not need to be modulated is the second pulse. After modulating the first pulse through the modulator to obtain the modulated pulse, the first pulse is aligned with the second pulse in both temporal and spatial dimensions to obtain the stimulated Raman excitation pulse pair.

Here, alignment is overlap. Temporal dimension alignment means that the pump pulse and the Stokes pulse are in the same position at a certain moment, that is, the pump pulse and the Stokes pulse may overlap, which may be achieved by delaying one of the pulses with a delay line. Spatial dimension alignment means that the pump pulse and the Stokes pulse merge into a same beam, which may be achieved through a component such as a dichroic mirrors (DM) that has beam merging capabilities.

Then, step S2 is performed, in which two stimulated Raman excitation pulse pairs with a relative delay are generated by using stimulated Raman excitation pulse, where the relative delay is adjustable. Here, the two stimulated Raman excitation pulse pairs may be generated by a delay scanning device. The delay scanning device may be an interferometer or other equipment, which is not limited here.

Finally, step S3 is performed, in which the relative delay is scanned by using the two stimulated Raman excitation pulse pairs to excite a sample to be tested to generate transient stimulated Raman scattering, and the transient stimulated Raman scattering signals corresponding to each relative delay are obtained.

It should be understood that in case that the first pulse is a pump pulse, the transient stimulated Raman scattering signals are stimulated Raman gain signals; in case that the first pulse is a Stokes pulse, the transient stimulated Raman scattering signals are stimulated Raman loss signals.

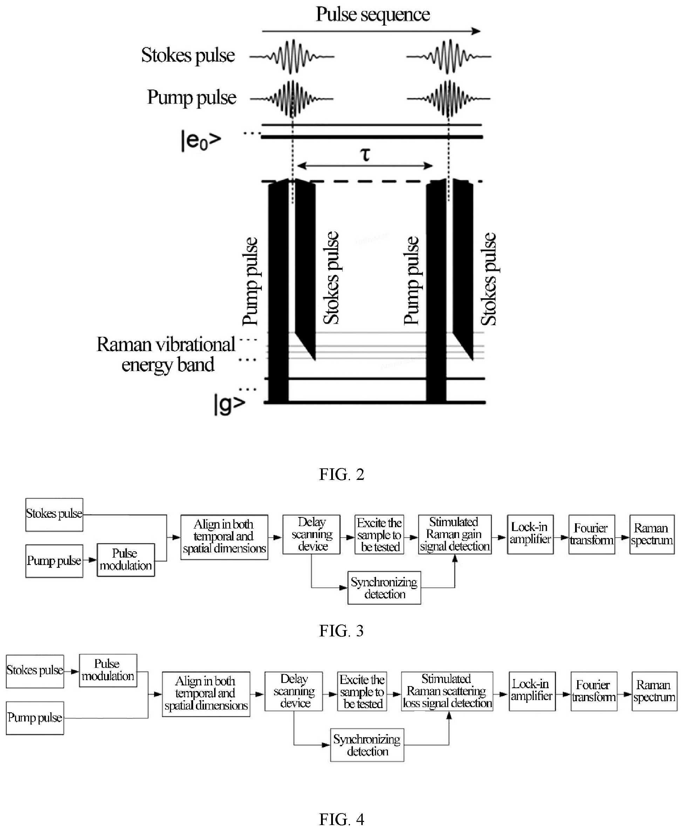

The excitation energy level diagram of the sample to be tested is shown in FIG. 2. In case that the relative delay between two stimulated Raman excitation pulse pairs is *τ*, the sample to be tested may experience two stimulated Raman excitations separated by *τ* in time. The vibrational quantum state wave packets generated by the two excitations are respectively *χ*(*t*) and *χ*(*t* ∓ τ), and *χ*(*t*) and *χ*(*t* ∓ *τ*) are separated by τ in propagation time. |*e*₀> is a ground state of the electronic energy level, and |g> is the vibrational ground state.

For each Raman mode |*vᵢ*〉 within the vibrational quantum state wave packet, the final excitation probability *Pᵢ* is the coherent superposition of each excitation, in which there is a quantum interference beat term proportional to cos(Ω*ᵢτ*). Here, Ω*ᵢτ* is the phase difference accumulated by the relative delay *τ*, and Ω*ᵢ* is a resonant frequency of the Raman mode.

The quantum interference beat term may be expressed in terms of the intensity of the transient stimulated Raman scattering signals. Then, using the obtained transient stimulated Raman scattering signals, the Raman spectrum corresponding to the sample to be tested may be determined. The sample to be tested may be a spatial proteome, a biological small molecule, and so on, which is not limited here. For example, by scanning the relative delay *τ* between two consecutive stimulated Raman excitation pulse pairs and then performing a Fourier transform on the time-domain sampling of the corresponding stimulated Raman scattering signals, the Raman spectra of all the stimulated Raman modes may be obtained.

Since the pump pulse and Stokes pulse may be generated using a femtosecond pulse laser, the time-domain-based Stimulated Raman scattering method adopts ultrafast time-domain spectrum techniques, namely transient stimulated Raman scattering (T-SRS) spectrum techniques. In the T-SRS spectrum techniques, by scanning the relative delay between two stimulated Raman excitation pulse pairs that contain the pump pulse and the Stokes pulse, the sample is excited to generate transient stimulated Raman scattering, the transient stimulated Raman scattering signals corresponding to each relative delay are obtained in the time domain, and then the Fourier transform is performed on the transient stimulated Raman scattering signals in the time domain, so that the Raman spectrum of the sample to be tested in the frequency domain may be determined.

The present application provides a time-domain-based stimulated Raman scattering method. including: first, generating a pump pulse and a Stokes pulse based on a femtosecond pulse laser, selecting a first pulse from one of the pump pulse and the Stokes pulse and modulating the first pulse by a modulator to obtain a modulated pulse, and aligning a second pulse from the other of the pump pulse and the Stokes pulse with the modulated pulse in both temporal and spatial dimensions to obtain a stimulated Raman excitation pulse pair; then, generating, based on the stimulated Raman excitation pulse pair, two stimulated Raman excitation pulse pairs with a relative delay, where the relative delay is adjustable; and finally, scanning, based on the two stimulated Raman excitation pulse pairs, the relative delay to excite a sample to be tested to generate transient stimulated Raman scattering, obtaining transient stimulated Raman scattering signals corresponding to each relative delay, and determining, based on the transient stimulated Raman scattering signals, a Raman spectrum corresponding to the sample to be tested. By modulating the first pulse and adopting two stimulated Raman excitation pulse pairs with an adjustable relative delay to excite the sample to be tested to generate transient stimulated Raman scattering, transient stimulated Raman scattering signals may be obtained, and hyperspectral data collection covering hundreds of wavenumbers may be achieved with only a single excitation, achieving high temporal resolution. At the same time, the spectral resolution of the vibrational energy level at lifetime broadening limit may be achieved through the method, which may solve the main technical bottleneck faced by traditional stimulated Raman scattering spectrum techniques one time. The method may be used in areas such as Raman scattering imaging and spectral detection, as well as related Raman probes.

According to the time-domain-based stimulated Raman scattering method provided in the embodiments of the present application, where scanning, based on the two stimulated Raman excitation pulse pairs, the relative delay to excite the sample to be tested to generate the transient stimulated Raman scattering, obtaining the transient stimulated Raman scattering signals corresponding to each relative delay, and determining, based on the transient stimulated Raman scattering signals, the Raman spectrum corresponding to the sample to be tested includes:
scanning, based on the two stimulated Raman excitation pulse pairs, the relative delay to excite the sample to be tested to generate the transient stimulated Raman scattering, and obtaining emergent excitation pulse pairs that have interacted with the sample to be tested;
performing photoelectric conversion and lock-in detection on the second pulses of the emergent excitation pulse pairs to obtain the transient stimulated Raman scattering signals; and
performing a Fourier transform on the transient stimulated Raman scattering signals to obtain the Raman spectrum.

Specifically, by scanning the relative delay through two stimulated Raman excitation pulse pairs, the sample to be tested may be excited to generate transient stimulated Raman scattering, to obtain emergent excitation pulse pairs that have interacted with the sample to be tested. The emergent excitation pulse pair also includes a pump pulse and a Stokes pulse. It should be understood that after the two stimulated Raman excitation pulse pairs interact with the sample to be tested, a portion of the pump pulse may be absorbed, that is, loss occurs; but the Stokes pulse may have some gain, that is, gain occurs. Therefore, in case that the first pulse is a Stokes pulse, the transient stimulated Raman scattering signals demodulated by lock-in detection are the stimulated Raman loss signals, and in case that the first pulse is a pump pulse, the transient stimulated Raman scattering signals demodulated by lock-in detection are the stimulated Raman gain signals.

Furthermore, when determining the Raman spectrum corresponding to the sample to be tested, the first pulses in the emergent excitation pulse pairs may be filtered through a filter to obtain the second pulses in the emergent excitation pulse pairs, and then photoelectric conversion and lock-in detection may be performed on the second pulses of the emergent excitation pulse pairs to obtain the transient stimulated Raman scattering signals. In addition, the second pulses in the emergent excitation pulse pairs may be converted through a photodetector to obtain the light intensity signals of the second pulses. The light intensity signals are fed into a lock-in amplifier for lock-in detection, and the transient stimulated Raman scattering signals are output. Then, by performing a Fourier transform on the transient stimulated Raman scattering signals, the transient stimulated Raman scattering signals in the time domain may be converted into a Raman spectrum in the frequency domain, ensuring the obtaining of the Raman spectrum.

According to the time-domain-based stimulated Raman scattering method provided in the embodiments of the present application, where subsequent to determining, based on the transient stimulated Raman scattering signals, the Raman spectrum corresponding to the sample to be tested, the method further includes:
obtaining, based on the Raman spectrum corresponding to each excited position on the sample to be tested, a Raman image corresponding to the sample to be tested.

Specifically, after the Raman spectrum corresponding to the sample to be tested is determined, a Raman image corresponding to the sample to be tested is obtained using the Raman spectrum corresponding to each excited position on the sample to be tested. By scanning the sample to be tested, two stimulated Raman excitation pulse pairs may be used to excite each excited position on the sample to be tested to generate transient stimulated Raman scattering. Scanning of the sample to be tested may be achieved through a two-dimensional galvanometer system, or through other devices with scanning capabilities, which are not limited here.

Furthermore, the Raman spectrum corresponding to each excited position may be obtained. By using each excited position and the corresponding Raman spectrum for Raman imaging, a Raman image of the sample to be tested may be obtained.

It should be understood that Raman imaging is a technique that generates images using a spectrum and spatial information, and the spatial information includes various excited positions on the sample to be tested. The Raman spectra are collected from different excitation positions, then each Raman spectrum is downsized to one corresponding pixel with only one value, and finally each Raman spectrum is represented as a value of the corresponding pixel.

The most common method is to use peak intensity for Raman imaging to represent the chemical distribution and concentration. The intensities, peak offsets, peak ratios, peak widths of multiple peaks, etc. are also used to generate Raman images in various situations. Pixel values are typically displayed in grayscale or false color.

The time-domain-based stimulated Raman scattering method in the embodiments of the present application may be used in areas such as supermulticolor microscopic imaging, spatial transcriptome imaging, spatial proteomics imaging, pathological imaging, biological small molecule imaging (such as neurotransmitters, acetylcholine), efficient disease detection, and drug screening.

As shown in FIG. 3, according to the time-domain-based stimulated Raman scattering method provided in the embodiments of the present application, as an example, the pump pulse is used as the first pulse, the method includes the following steps:
generate a pump pulse and a Stokes pulse based on a femtosecond pulse laser, and modulate the pump pulse to obtain a modulated pulse;
align the modulated pulse with the Stokes pulse in both temporal and spatial dimensions to obtain a stimulated Raman excitation pulse pair, and generate, by using a delay scanning device, two stimulated Raman excitation pulse pairs with a relative delay, where the relative delay is adjustable;
scan, by using the two stimulated Raman excitation pulse pairs, the relative delay to excite a sample to be tested to generate transient stimulated Raman scattering, and synchronously detect the stimulated Raman gain signal obtained under each relative delay by using the lock-in amplifier; and
perform a Fourier transform on the stimulated Raman gain signal to obtain the corresponding Raman spectrum of the sample to be tested.

As shown in FIG. 4, according to the time-domain-based stimulated Raman scattering method provided in the embodiments of the present application, as an example, the Stokes pulse is used as the first pulse, the method includes the following steps:
generate a pump pulse and a Stokes pulse based on a femtosecond pulse laser, and modulate the Stokes pulse to obtain a modulated pulse;
align the pump pulse with the modulated pulse in both temporal and spatial dimensions to obtain a stimulated Raman excitation pulse pair, and generate, by using a delay scanning device, two stimulated Raman excitation pulse pairs with a relative delay, where the relative delay is adjustable;
scan, by using the two stimulated Raman excitation pulse pairs, the relative delay to excite a sample to be tested to generate transient stimulated Raman scattering, and synchronously detect the stimulated Raman loss signal obtained under each relative delay by using the lock-in amplifier;
perform a Fourier transform on the stimulated Raman loss signal to obtain the corresponding Raman spectrum of the sample to be tested.

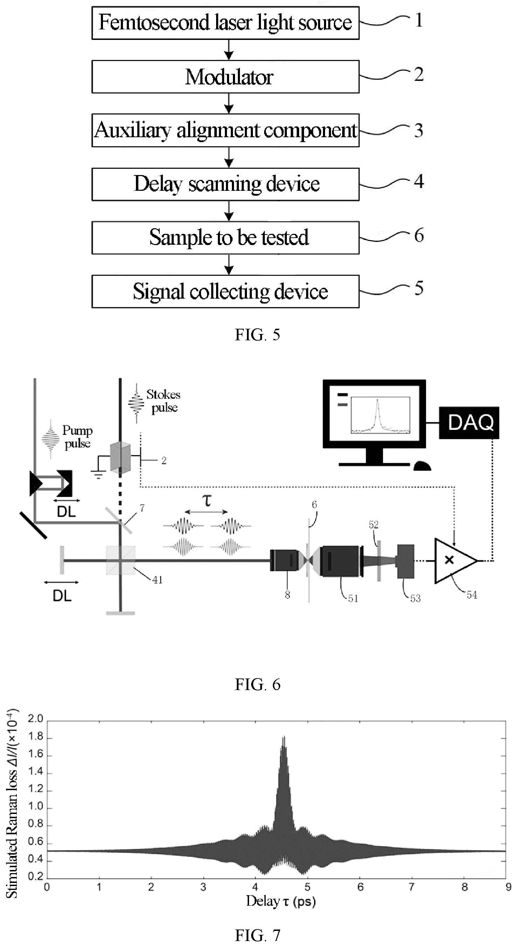

As shown in FIG. 5, on the basis of the above embodiments, a time-domain-based stimulated Raman scattering system is also provided in the present application, including: a femtosecond laser light source 1, a modulator 2, an auxiliary alignment component 3, a delay scanning device 4 and a signal collecting device 5;
the femtosecond laser light source 1 is used to generate a pump pulse and a Stokes pulse based on a femtosecond pulse laser;
the modulator 2 is used to modulate a first pulse from one of the pump pulse and the Stokes pulse to obtain a modulated pulse;
the auxiliary alignment component 3 is used to align the modulated pulse with a second pulse from the other of the pump pulse and the Stokes pulse in both temporal and spatial dimensions to obtain a stimulated Raman excitation pulse pair;
the delay scanning device 4 is used to generate, based on the stimulated Raman excitation pulse pair, two stimulated Raman excitation pulse pairs with a relative delay, where the relative delay is adjustable, and the two stimulated Raman excitation pulse pairs are used to excite a sample to be tested to generate transient stimulated Raman scattering; and
the signal collecting device is used to collect emergent excitation pulse pairs that have interacted with the sample to be tested, the emergent excitation pulse pairs being obtained after the sample to be tested generates the transient stimulated Raman scattering; obtain transient stimulated Raman scattering signals based on the emergent excitation pulse pairs; and determine a Raman spectrum corresponding to the sample to be tested based on the transient stimulated Raman scattering signals.

Specifically, according to the time-domain-based stimulated Raman scattering system in the embodiments of the present application, the femtosecond laser light source 1 is used to generate a pump pulse and a Stokes pulse.

The modulator 2 is used to modulate the pump pulse or the Stokes pulse to obtain the modulated pulse.

The auxiliary alignment component 3 is used to align the Stokes pulse or pump pulse with the modulated pulse in both temporal and spatial dimensions to obtain a stimulated Raman excitation pulse pair. That is, in case that the modulator 2 modulates the pump pulse as the first pulse to obtain the modulated pulse, the auxiliary alignment component 3 aligns the Stokes pulse as the second pulse with the modulated pulse in both temporal and spatial dimensions; in case that the modulator 2 modulates the Stokes pulse as the first pulse, the auxiliary alignment component 3 aligns the pump pulse as the second pulse with the modulated pulse in both temporal and spatial dimensions.

The auxiliary alignment component 3 may include multiple elements, such as a delay line and a dichroic mirror, in which the alignment in the temporal dimension is achieved through the delay line and the alignment in the spatial dimension is achieved through the dichroic mirror.

The stimulated Raman excitation pulse pair obtained through the auxiliary alignment component 3 may be used to pump the molecules of the sample to be tested into excited vibrational states at the ground state of the electronic energy level.

The delay scanning device 4 may use the stimulated Raman excitation pulse pair to generate two stimulated Raman excitation pulse pairs with a relative delay, where the relative delay is adjustable. The two stimulated Raman excitation pulse pairs are used to excite the sample to be tested 6 to generate transient stimulated Raman scattering. The delay scanning device 4 may be an interferometer. The interferometer may be a Michelson interferometer, a Mach-Zehnder interferometer, or any other interferometer.

The interferometer may include two arms, a moving arm and a fixed arm, each of which may receive a stimulated Raman excitation pulse pair. By making the arm lengths of the moving arm and the fixed arm different, a relative delay may be provided between the two stimulated Raman excitation pulse pairs, and the relative delay may be adjustable by controlling the arm length of the moving arm. The arm length of the moving arm may be adjusted either by an optical delay line or by a mirror group, which is not limited here.

The sample to be tested 6 may be fixed on the stage or placed in the cuvette. The sample to be tested 6 may be provided on the propagation optical path of two stimulated Raman excitation pulse pairs. The two stimulated Raman excitation pulse pairs excite the sample to be tested 6 to generate transient stimulated Raman scattering and transient stimulated Raman scattering signals are output.

In the embodiments of the present application, the relative delay *τ* between the two stimulated Raman excitation pulse pairs is the delay scanning range of the delay scanning device 2, which may be set to be greater than 5 ps, so as to ensure that the determined resolution of the Raman spectrum is higher than 8 cm⁻¹. The resolution is -1.2/5 ps under the box-car apodization function, which is higher than the line width of the general Raman mode. The step-size of the delay scanning may be set to less than 1 fs, so that transient absorption spectrum of both single and multiple photons of the excited Raman excitation pulse may be captured simultaneously.

The time-domain-based stimulated Raman scattering system also includes a signal collecting device 5, which may collect excitation pulse pairs emitted by the sample to be tested after the sample to be tested generates transient stimulated Raman scattering, obtain the transient stimulated Raman scattering signals based on the excitation pulse pairs, and use the transient stimulated Raman scattering signals to determine the Raman spectrum corresponding to the sample to be tested 6.

The signal collecting device 5 may include a condenser element, a filter element and a photoelectric detection element arranged in sequence along the optical path, as well as a lock-in amplifier, a data acquisition card (DAQ) and a spectral reconstruction device connected to the photoelectric detection element.

The condenser element may be a condenser lens used to collect the emergent excitation pulse pairs.

The filter element may be a filter used to filter out the first pulses in the emergent excitation pulse pairs.

The photoelectric detection element may be a photodetector used to detect the light intensity signals of the second pulses in the emergent excitation pulse pairs.

A lock-in amplifier is used to perform a lock-in detection of the light intensity signal and demodulate the transient stimulated Raman scattering signals from the light intensity signal.

The data acquisition card is used to collect the transient stimulated Raman scattering signals, and the Raman spectrum corresponding to sample to be tested 6 may be obtained by performing a Fourier transform on the transient stimulated Raman scattering signals. The data acquisition card may be connected to a display through which the Raman spectrum may be displayed.

As shown in FIG. 6, as an example, the arm length of the moving arm of the interferometer may be adjusted through an optical delay line (DL). The pump pulse generated in the time-domain-based stimulated Raman scattering system is delayed through an optical delay line (DL) and aligned with the modulated pulse generated by the Stokes pulse through the modulator in the temporal dimension.

The delayed pump pulse, after being reflected by the mirror, reaches the dichroic mirror 7, and the modulated pulse generated after the Stokes pulse is modulated by modulator 2, reaches the dichroic mirror 7 and aligns with the pump pulse in the spatial dimension at the dichroic mirror 7, thereby obtaining the stimulated Raman excitation pulse pair.

The stimulated Raman excitation pulse, after passing through the interferometer, generates two stimulated Raman excitation pulse pairs with a relative delay *τ*, where the relative delay is adjustable. The interferometer includes a beam splitter (BS) 41, an optical delay line (DL), and two reflection mirrors, and the arm length of the moving arm of the interferometer is adjusted by the optical delay line.

The pulse sequence including the two stimulated Raman excitation pulse pairs is focused through the objective lens (Obj) 8 onto the sample to be tested 6, achieving excitation of the sample to be tested 6. Then, the output excitation pulse pair is collected by the condenser (Condenser) 51, and filtered through the filter 52 to remove the Stokes pulse, and the stimulated Raman loss signal is detected by the photodiode (PD) 53. The collected stimulated Raman loss signal is detected by the lock-in amplifier 54 and then collected by the data acquisition card (DAQ) for spectrum reconstruction.

As an example, the sample to be tested 6 is a DMSO molecule. In case that the first pulse is a Stokes pulse, the obtained transient stimulated Raman scattering signals are stimulated Raman loss signals, as shown in FIG. 7. The horizontal axis in FIG. 7 represents the relative delay τ (ps) between the two stimulated Raman excitation pulse pairs and the vertical axis represents the relative intensity ΔI/I of the stimulated Raman loss signals, where the magnitude of the relative intensity is 10⁻⁴.

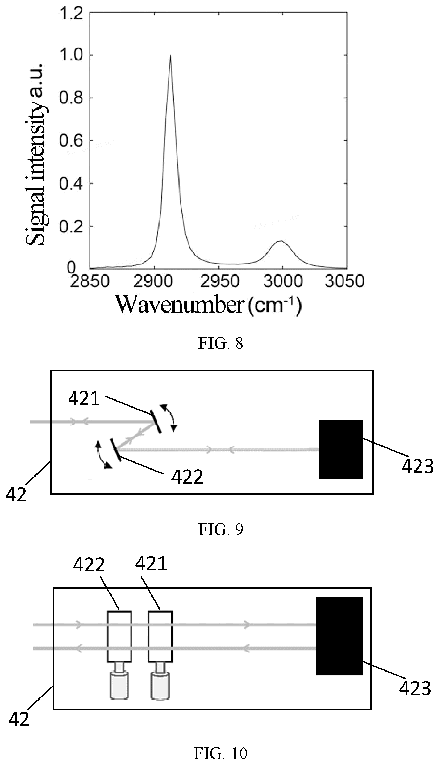

Furthermore, the Raman spectrum corresponding to sample to be tested 6 is shown in FIG. 8, the horizontal axis represents the wavenumber (cm⁻¹) and the vertical axis represents the signal strength of the amplified signals.

The time-domain-based stimulated Raman scattering system provided in the embodiment of the present application includes: a femtosecond laser light source, a modulator, an auxiliary alignment component, a delay scanning device and a signal collecting device. The pump pulse and Stokes pulse is generated through the femtosecond laser light source. The first pulse is modulated by the modulator to obtain the modulated pulse. The modulated pulse is aligned with the second pulse in both temporal and spatial dimensions through the auxiliary alignment component to obtain the stimulated Raman excitation pulse pair. Two stimulated Raman excitation pulse pairs with a relative delay are generated through the delay scanning device, where the relative delay is adjustable. The transient stimulated Raman scattering signals obtained by transient stimulated Raman scattering after excitation of the sample to be tested are collected by the signal acquisition device. The Raman spectrum corresponding to the sample to be tested is determined using the transient stimulated Raman scattering signals. The system uses a modulator to modulate the first pulse and adopts a delay scanning device to generate two stimulated Raman excitation pulse pairs with an adjustable relative delay to excite the sample to be tested to generate transient stimulated Raman scattering, which may achieve hyperspectral data collection covering hundreds of wavenumbers with just a single excitation. At the same time, the spectral resolution of the vibrational energy level at lifetime broadening limit may be achieved through the system, which may solve the main technical bottleneck faced by traditional stimulated Raman scattering spectrum techniques one time. The method may be used in areas such as Raman scattering imaging and spectral detection, as well as related Raman probes.

According to the time-domain-based stimulated Raman scattering system provided in the embodiments of the present application, the system also includes a two-dimensional galvanometer system. The two-dimensional galvanometer system may be provided between the delay scanning device 4 and the signal collecting device 5, so that the sample to be tested may be scanned through the two-dimensional galvanometer system. Furthermore, by using two stimulated Raman excitation pulse pairs, each excited position on the sample to be tested is excited to generate the transient stimulated Raman scattering, and the Raman spectrum corresponding to each excited position is obtained.

Then, by using each excited position and its corresponding Raman spectrum for Raman imaging, the Raman image corresponding to the sample to be tested may be obtained.

According to the time-domain-based stimulated Raman scattering system provided in the embodiments of the present application, the delay scanning device includes an interferometer.

The moving arm of the interferometer includes a delay control structure. FIG. 9 is a top view of the delay control structure 42 in the moving arm of the interferometer, and FIG. 10 is a side view of FIG. 9.

The delay control structure 42 includes: the first reflection element 421, the second reflection element 422 and the third reflection element 423.

A reflection surface of the first reflection element 421 and a reflection surface of the second reflection element 422 are parallel and opposite to each other, and the third reflection element 423 is provided on the reflection light path of the second reflection element 422.

The first reflection element 421 and the second reflection element 422 are configured to rotate synchronously in a same direction.

The third reflection element 423 is used to deflect light beams on the reflection light path of the second reflection element 422 and reflect it onto the second reflection element 422, and the light beams are output in sequence after passing through the second reflection element 422 and the first reflection element 421.

The reflection surface of the first reflection element 421 and the reflection surface of the second reflection element 422 are parallel and opposite to each other, and the first reflection element 421 and the second reflection element 422 are configured to rotate synchronously in the same direction to ensure that the reflection surfaces of the first reflection element and the second reflection element remain parallel in the process of the synchronous rotation. Here, both the first reflection element 421 and the second reflection element 422 may be driven by an electrical signal and may rotate to a specific angle.

Both the first reflection element 421 and the second reflection element 422 may be scanning galvanometers or other forms of high-speed scanning devices such as resonators. Because the linearity of the scanning galvanometer may reach up to 99.9% and the repeat positioning accuracy is high, the delay control structure may have extremely high stability and precision. At the same time, the fast swing speed of the scanning galvanometer may improve the response speed of the delay control structure, which is beneficial to the practical application of the delay control structure.

The third reflection element 423 is provided on the reflection light path of the second reflection element 422, which is used to deflect the beam on the reflection light path of the second reflection element 422 and then reflect the beam onto the second reflection element 422, and then the beam is output through the second reflection element 422 and the first reflection element 421 in sequence.

The incident light is reflected by the first reflection element 421 to the second reflection element 422, and the beam obtained after reflection by the second reflection element 422, i.e., the beam on the reflection light path of the second reflection element 422, is parallel to the incident light and has the same propagation direction with the incident light. The beam on the reflection light path of the second reflection element 422 continues to be transmitted to the third reflection element 423, and is reflected by the third reflection element 423.

The third reflection element 423 may deflect and reflect the beam on the reflection light path of the second reflection element 422, which enables the adjusted propagation direction to be opposite to the original propagation direction.

In FIGS. 9 and 10, the adjusted propagation direction opposite to the original propagation direction is shown, where the adjusted propagation direction is the propagation direction of the beam on reflection light path of the second reflection element 422 after adjustment by the third reflection element 423.

Due to the exist of the first reflection element 421 and the second reflection element 422, the delay control structure 42 may cause a delay to the incident light, and the phase and optical path of the incident light also change.

Moreover, since the first reflection element 421 and the second reflection element 422 may rotate synchronously in the same direction, the delay caused by the delay control structure 42 to the incident light may be adjusted according to the rotation angles of the first reflection element 421 and the second reflection element 422 and the placement positions of the first reflection element 421 and the second reflection element 422.

By scanning the rotation angles of the first reflection element 421 and the second reflection element 422, it is possible to scan the delay of the incident light. By adjusting the propagation direction of beam on the reflection light path of the second reflection element 422 through the third reflection element 423, spatial backscanning is achieved. The propagation direction of the incident light does not change with the rotation of the first reflection element 421 or the second reflection element 422, but the delay (optical path, phase) varies with the rotation angles of the first reflection element 421 and the second reflection element 422.

The delay control structure is simple and the light path is easy to adjust. It only requires the synchronous rotation of the first and second reflection elements to achieve high-speed delay scanning, which has the advantages of fast scanning speed and wide applicability.

According to the time-domain-based stimulated Raman scattering system provided in the embodiments of the present application, the third reflection element includes a first reflection part and a second reflection part, and a reflection surface of the first reflection part is perpendicular to a reflection surface of the second reflection part; and the light beams on the reflection light path of the second reflection element are deflected by the first reflection part and the second reflection part in sequence and then reflected onto the second reflection element; or
the third reflection element includes three mutually perpendicular reflection surfaces, and the light beams on the reflection light path of the second reflection element are deflected by the three reflection surfaces in sequence and then reflected onto the second reflection element.

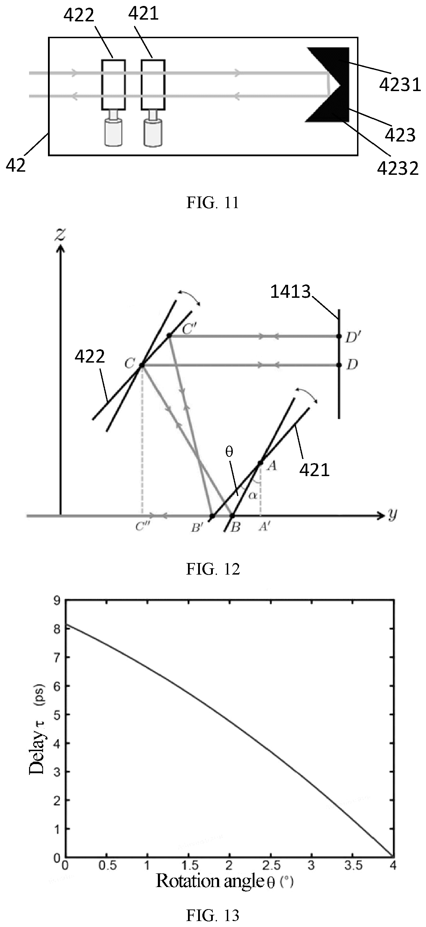

Specifically, as shown in FIG. 11, the third reflection element 423 may be a roof prism, including a first reflection part 4231 and a second reflection part 4232 arranged vertically, with the reflection surface of the first reflection part 4231 perpendicular to that of the second reflection part 4232. The first reflection part 4231 may be either above or below the second reflection part 4232, and FIG. 11 only shows the case where the first reflection part 4231 is above the second reflection part 4232.

The beam on the reflection light path of the second reflection element 422 is reflected by the first reflection part 4231 and the second reflection part 4232 in sequence. After being deflected in the vertical direction, the beam is reflected onto the second reflection element 422 and then reflected by the second reflection element 422 and the first reflection element 421 in sequence before being output. In particular, due to the different placement positions and directions of the second reflection element 422, the beam on the reflection light path of the second reflection element 422 is reflected by the first reflection part 4231 and the second reflection part 4232 in sequence, and then may be deflected in any direction before being reflected onto the second reflection element 422. And the beam is reflected by the second reflection element 422 and the first reflection element 421 in sequence before being output. FIG. 11 shows only the case where any direction is a vertical direction.

In case that the first reflection part 4231 is above the second reflection part 4232, the beam on the reflection light path of the second reflection element 422, after being reflected by the first reflection part 4231 and the second reflection part 4232 in sequence, may be above the beam on the reflection light path of the second reflection element 422. In case that the first reflection part 4231 is below the second reflection part 4232, after being reflected by the first reflection part 4231 and the second reflection part 4232 in sequence, the obtained beam may be below the beam on the reflection light path of the second reflection element 422.

In addition, the third reflection element 423 may also be a retroreflector, including three mutually perpendicular reflection surfaces, and the beam on the reflection light path of the second reflection element 422 is reflected onto the second reflection element 422 after being deflected in any direction by the three reflection surfaces in sequence.

In the embodiments of the present application, a third reflection element with a first reflection part and a second reflection part or a third reflection element with three mutually perpendicular reflection surfaces can be used to quickly adjust the direction of the beam propagation, and the structure is simple and easy to implement.

According to the time-domain-based stimulated Raman scattering system provided in the embodiments of the present application, a delay caused by the delay control structure to an incident light is determined based on: rotation angles of the first reflection element and second reflection element, a distance between the first reflection element and second reflection element in a propagation direction of the incident light, included angles formed by the first reflection element and the second reflection element respectively with the propagation direction of the incident light, and an offset of a rotation axis of the first reflection element relative to the propagation direction of the incident light.

Specifically, the delay caused by the delay control structure 42 to the incident light is mainly generated by the first reflection element 421 and the second reflection element 422. The magnitude of the delay may be determined based on the rotation angles of the first reflection element 421 and the second reflection element 422 in case of the given conditions: the distance between the first reflecting element 421 and the second reflecting element 422 in the propagation direction of incident light, the included angles formed by the first reflection element 421 and the second reflection element 422 respectively with the propagation direction of the incident light, and offset of a rotation axis of the first reflection element 421 relative to the propagation direction of the incident light.

As shown in FIG. 12, the y0z coordinate system is constructed on the horizontal plane, with the rotation axis of the first reflection element 421 being A and the rotation axis of the second reflection element 422 being C. The initial positions of the first reflection element 421 and the second reflection element 422 may be represented by the included angles formed by the first reflection element 421 and the second reflection element 422 respectively with the propagation direction of the incident light. In FIG. 12, the propagation direction of the incident light is y, the coangle of the included angles formed by the first reflection element 421 and the second reflection element 422 respectively with the propagation direction of the incident light is, the angle α between the reflection surfaces of the first reflection element 421 and the second reflection element 422 and the z direction. In FIG. 12, the projection of A on the Y-axis is A', and the included angle between the line AA' and the reflection surface of the first reflection element 421 is α.

The distance between the first reflection element 421 and the second reflection element 422 in the propagation direction of incident light is the distance A̅'̅C̅"̅ between A' and the Y-axis projection C" of C, that is y_{A} - y_{C}.

The offset of the rotation axis of the first reflection element 421 relative to the propagation direction of incident light is, the distance A̅B̅ between A and B.

The incident point of the incident light on the first reflection element 421 is B, the incident point of the reflected light from the first reflection element 421 at the second reflection element 422 is C, and the incident point of the reflected light from the second reflection element 422 at the third reflection element 423 is D.

On the basis, in case that the axis A of the first reflection element 421 rotates clockwise at an angle of θ and the axis C of the second reflection element 422 rotates clockwise at an angle of θ, the incident point of the incident light at the first reflection element 421 is B', and the incident point of the reflected light at the second reflecting element 422 is C'. The incident point of the reflected light from the second reflection element 422 at the third reflection element 423 is D'.

Thus, the delay caused by the rotation angle θ of the incident light may be calculated by the length difference between path B'C'D'C'B' and path B'BCDCBB', and the phase difference or optical path difference may also be calculated by the length difference.

In the embodiments of the present application, by determining the delay of the incident light caused by the delay control structure through the rotation angles of the first reflection element and second reflection element, the rapid determination and control of the delay may be achieved.

Based on the above embodiments, the range of rotation angle is from -1° to 4°, the distance is 40 mm, the included angles are 75°, the offset is 5 mm, and the range of delay caused by the delay control structure to the incident light is 0 to 12 ps.

Specifically, in FIG. 12, in case that the offset is A̅B̅ = 5mm, the distance between the first reflection element 421 and the second reflection element 422 in the propagation direction of incident light is y_{A} - y_{C} = 40mm, that is the length A̅'̅C̅"̅ = 40mm. The included angles formed by the first reflection element 421 and the second reflection element 422 respectively with the propagation direction of the incident light are 75°, that is α = 15°. The delay on the incident light is τ by calculating the length difference between path B'C'D'C'B' and path B'BCDCBB' through the rotation angle θ.

In the embodiments of the present application, the relationship between the delay τ and the rotation angle θ is shown in FIG. 13. In case that the range of the rotation angle is from -1° to 4°, the range of delay τ may reach 0 to 12 ps, which easily achieves the magnitude of 10 picoseconds, thereby meeting the delay control requirements of the majority of ultrafast pulses, and achieving a wide range of optical delay control for the incident light.

According to the time-domain-based stimulated Raman scattering system provided in the embodiments of the present application, the incident light is an ultrafast pulse laser or any collimated beam.

Specifically, the delay control structure in the time-domain-based stimulated Raman scattering system may not only perform delay control and delay scanning on the incident light of any collimated beam, but also perform delay control and delay scanning on the incident light of the ultrafast pulse laser, thus having a wide range of applications.

According to the time-domain-based stimulated Raman scattering system provided in the embodiments of the present application, the delay control structure further includes a first drive device and a second drive device;
the first drive device is used to drive the first reflection element to rotate; and
the second drive device is used to drive the second reflection element to rotate.

Specifically, in the embodiments of the present application, the delay control structure may further include a first drive device for driving the rotation of the first reflection element 421 and a second drive device for driving the rotation of the second reflection element 422. Both the first drive device and the second drive device may be a device such as a motor that may be used to drive the element to rotate.

In the embodiments of the present application, the rotation of the first reflection element and the second reflection element is driven by two drive devices respectively, which may make the driving process of the first reflection element and the second reflection element independent, simplifying the driving process.

According to the time-domain-based stimulated Raman scattering system provided in the embodiments of the present application, the system further includes a controller, where the controller is connected to the first drive device and the second drive device respectively; and
the controller is configured to control continuous rotation of the first drive device and the second drive device to scan the rotation angles of the first reflection element and second reflection element and achieve delay scanning.

According to the time-domain-based stimulated Raman scattering system provided in the embodiments of the present application, the interferometer further includes a beam splitter and a reference signal detection device;
the beam splitter is used to divide a target beam of the stimulated Raman excitation pulse pair obtained through the auxiliary alignment component into a first part beam and a second part beam; the first part beam is transmitted along the moving arm of the interferometer, and the second part beam is transmitted along a fixed arm of the interferometer;
the beam splitter is also used to combine a beam output from the moving arm of the interferometer with a beam output from the fixed arm of the interferometer to obtain a third part beam and a fourth part beam respectively; the third part beam is used to excite the sample to be testes to generate the transient stimulated Raman scattering; and
the reference signal detection device is used to receive the fourth part beam and convert the fourth part beam into a reference signal with a coherence time greater than a preset threshold; and the reference signal is used to calibrate position information of the delay control structure.

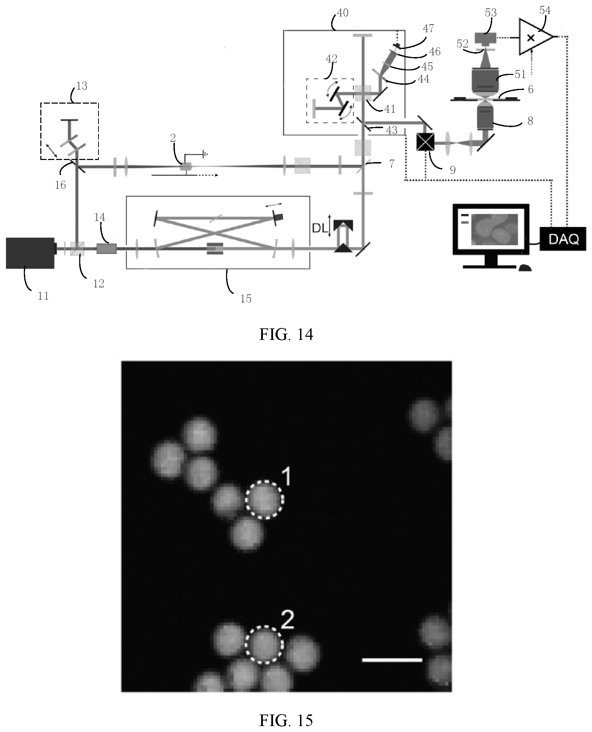

Specifically, as shown in FIG. 14, the interferometer 40 includes not only the beam splitter 41 and the delay control structure 42, but also the reference signal detection device. The beam splitter 41 may be a semi-transmissive and semi-reflective beam splitter with a transmittance of around 50%.

The stimulated Raman excitation pulse pair generated by the femtosecond laser light source is incident into the beam splitter 41 through the space above the first reflector 43. The beam splitter 41 divides the target beam of the stimulated Raman excitation pulse pair generated by the femtosecond laser light source into the first part beam and the second part beam. The first part beam is transmitted along the moving arm of the interferometer 40. The second part beam travels along the fixed arm of the interferometer 40.

The beam splitter 41 is also used to combine the beam output from the moving arm with the beam output from the fixed arm, and to obtain the third part beam and fourth part beam respectively. The third part beam may be reflected by the first reflector 43 to the second reflector, then reflected by the second reflector to the two-dimensional galvanometer system 9, and then expanded by two convex lenses of different focal lengths in sequence and incident on the third reflector, then reflected by the third reflector to the objective lens 8, and focused by the objective lens 8 onto the sample to be tested 6 on the stage to excite the sample to be tested 6. Then, the emergent excitation pulse pairs are collected by the condenser (Condenser) 51, filtered by the filter (Filter) 52 to remove the Stokes pulse, and the light intensity signal of the pump pulse is detected by the photodiode (PD) 53. The intensity signal of the pump laser collected is demodulated by a lock-in amplifier 54 to obtain the stimulated Raman loss signal, which is then collected by a data acquisition card (DAQ) and used for spectrum reconstruction.

The reference signal detection device may receive the sixth part beam and convert the sixth part beam into a reference signal with a coherence time greater than the preset threshold. The preset threshold here may be set as needed, for example, to 10 ps. The reference signal is narrowband high coherence light. The position information of the delay control structure may be calibrated by the interference fringes of the reference signal.

In the present application, the introduction of the reference signal detection device can avoid the deviation in control of the relative delay caused by the non-uniform movement of the translation stage on which the delay control structure is located, and can achieve the precise acquisition of the transient stimulated Raman scattering signals, thereby improving the accuracy of the Raman spectrum.

According to the time-domain-based stimulated Raman scattering system provided in the embodiments of the present application, the reference signal detection device includes a grating 44, a lens 45, a slit 46 and a photodiode 47;
the fourth part beam passes through the grating 44, the lens 45 and the slit 46 in sequence to obtain the reference signal; the reference signal may be detected by the photodiode 47. That is, the photodiode 47 is used to detect the reference signal.

According to the time-domain-based stimulated Raman scattering system provided in the embodiments of the present application, the femtosecond laser light source 1 includes a femtosecond laser 11, a polarization splitter 12, a first light source branch and a second light source branch;
the femtosecond laser 11 is used to generate the femtosecond pulse laser; the polarization splitter 12 is used to divide the femtosecond pulse laser into a fifth part beam and a sixth part beam;
the first light source branch includes a dispersion compensation device 13, the dispersion compensation device 13 being used to perform dispersion compensation on the fifth part beam to obtain the Stokes pulse;
the second light source branch includes a frequency doubler 14 and an optical parametric oscillator 15; the frequency doubler 14 is used to double the sixth part beam to obtain a frequency-doubled laser; and the optical parametric oscillator 15 is driven by the frequency-doubled laser, and outputs the pump pulse.

Specifically, the parameters of the femtosecond laser 11 may include: a central wavelength of 1030 nm, a repeat frequency of 100 MHz, and a pulse width of 80 fs. The femtosecond laser 11 is used to generate a femtosecond pulse laser. A polarization splitter 12 may split the femtosecond pulse laser into a fifth part beam with a first polarization state and a sixth part beam with a second polarization state.

The dispersion compensation device 13 may perform dispersion compensation on the fifth part beam so that the pulse width of the fifth part beam is close to the Fourier transform limit, thereby obtaining the Stokes pulse.

To shorten the optical path length and reduce the size of the time-domain-based stimulated Raman scattering system, a fourth reflector 16 may be provided on the first light source branch at a height lower than the propagation optical path of the fifth part beam, allowing the fifth part beam to be transmitted above the fourth reflector to the dispersion compensation device 13. A quarter-wave plate (QWP) and a convex lens are also arranged between the fourth reflector 16 and the modulator 2 in sequence.

The dispersion compensation device 13 may include two prisms and a reflector. The fifth part beam passes through the two prisms in sequence and is reflected by the reflector, and the reflected beam passes through the two prisms in sequence and is reflected by the fourth reflector 16 to obtain the Stokes pulse beam.

The frequency doubler 14 doubles the sixth part beam, that is, the frequency doubler 14 doubles the frequency of the sixth part beam to twice the original, thereby obtaining a frequency-doubled laser. The optical parametric oscillator 15, driven by the frequency-doubled laser, outputs the pump pulse. The optical parametric oscillator 15 includes lithium triborate (LBO) crystal, an oven, a Piezo, and a Lyot filter. The LBO crystal and oven are used for laser wavelength tuning, the Piezo is used for laser wavelength locking, and the Lyot filter is used for mode control and filtering.

According to the time-domain-based stimulated Raman scattering system provided in the embodiments of the present application, the auxiliary alignment component includes an adjustable optical delay line on the second light source branch, and a dichroic mirror 7 on the first light source branch and the second light source branch;
the optical delay line is used to apply a delay to the pump pulse to align the pump pulse with the Stokes pulse in the temporal dimension; and
the dichroic mirror is used to align the pump pulse with the Stokes pulse in the spatial dimension.

Specifically, as shown in FIG. 14, on the second light source branch between the optical delay line and the dichroic mirror 7, a reflector and a half-wave plate (HWP) are also arranged in sequence. On the first light source branch between the modulator 2 and the dichroic mirror 7, there are also convex lenses, polarization splitters and half-wave plates in sequence. A polarization splitter is also provided between the dichroic mirror 7 and the first mirror 43.

FIG. 15 shows the imaging results of the Polystyrene and polymethyl methacrylate (PMMA) mixed microspheres collected using the time-domain-based stimulated Raman scattering system shown in FIG. 14 and the parameter settings of the delay control structure shown in FIG. 13, which include two types of microspheres, namely microsphere 1 and microsphere 2. The length of the scale is 10*µm.*

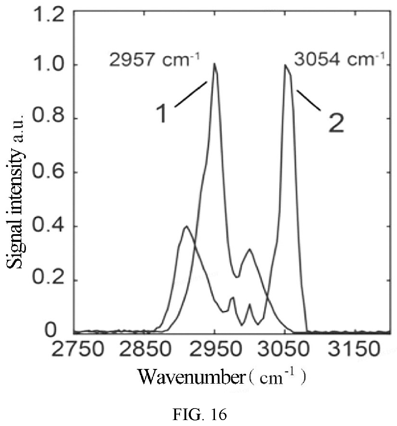

FIG. 16 shows hyperspectral information reconstructed from the microsphere 1 and microsphere 2 of the imaging results obtained from FIG. 15. The spectral information may be used to distinguish the two types of microspheres. In FIG. 16, the horizontal axis represents the wavenumber (cm⁻¹), and the vertical axis represents the normalized signal strength.

The device embodiments described above are merely illustrative, where the units described as separate components may or may not be physically separate, and the components shown as units may or may not be physical units, either located in one place or distributed across multiple network units. Some or all of the modules may be selected as needed to achieve the purpose of the embodiments. They may be understood and implemented by those of ordinary skill in the art without creative effort.

Through the description of the above implementation methods, it is clear to those of ordinary skill in the art that each implementation method may be achieved by means of software plus the necessary general hardware platform, and of course, through hardware. Based on this understanding, a part of the above technical solutions essentially or that contributes to the existing technology may be presented in the form of a software product, which may be stored in computer-readable storage media such as ROM/RAM, disk, optical disc, etc., including several instructions to enable a computer device (which can be a personal computer, server) or network devices, etc., perform the methods described in each embodiment or certain parts of the embodiments.

Finally, it should be noted that the above embodiments are used only to illustrate the technical solutions of the present application and are not to limit it. Although the present application is described in detail with reference to the foregoing embodiments, it should be understood by those of ordinary skill in the art that the technical solutions described in the foregoing embodiments may still be modified, or some of the technical features therein may be replaced equivalently. And such modifications or substitutions do not deviate the essence of the corresponding technical solutions from the spirit and scope of the technical solutions of the embodiments of the present application.

## Claims

1. A time-domain-based stimulated Raman scattering method, comprising:
generating a pump pulse and a Stokes pulse based on a femtosecond pulse laser, selecting a first pulse from one of the pump pulse and the Stokes pulse and modulating the first pulse by a modulator to obtain a modulated pulse, and aligning a second pulse from the other of the pump pulse and the Stokes pulse with the modulated pulse in both temporal and spatial dimensions to obtain a stimulated Raman excitation pulse pair;
generating, based on the stimulated Raman excitation pulse pair, two stimulated Raman excitation pulse pairs with a relative delay, wherein the relative delay is adjustable; and
scanning, based on the two stimulated Raman excitation pulse pairs, the relative delay to excite a sample to be tested to generate transient stimulated Raman scattering, obtaining transient stimulated Raman scattering signals corresponding to each relative delay, and determining, based on the transient stimulated Raman scattering signals, a Raman spectrum corresponding to the sample to be tested.

2. The method of claim 1, wherein in case that the first pulse is the pump pulse, the transient stimulated Raman scattering signals are stimulated Raman gain signals; or
in case that the first pulse is the Stokes pulse, the transient stimulated Raman scattering signals are stimulated Raman loss signals.

3. The method of claim 1, wherein scanning, based on the two stimulated Raman excitation pulse pairs, the relative delay to excite the sample to be tested to generate the transient stimulated Raman scattering, obtaining the transient stimulated Raman scattering signals corresponding to each relative delay, and determining, based on the transient stimulated Raman scattering signals, the Raman spectrum corresponding to the sample to be tested comprises:
scanning, based on the two stimulated Raman excitation pulse pairs, the relative delay to excite the sample to be tested to generate the transient stimulated Raman scattering, and obtaining emergent excitation pulse pairs that have interacted with the sample to be tested;
performing photoelectric conversion and lock-in detection on the second pulses of the emergent excitation pulse pairs to obtain the transient stimulated Raman scattering signals; and
performing a Fourier transform on the transient stimulated Raman scattering signals to obtain the Raman spectrum.

4. The method of any of claims 1 to 3, wherein subsequent to determining, based on the transient stimulated Raman scattering signals, the Raman spectrum corresponding to the sample to be tested, the method further comprises:
obtaining, based on the Raman spectrum corresponding to each excited position on the sample to be tested, a Raman image corresponding to the sample to be tested.

5. A time-domain-based stimulated Raman scattering system, comprising: a femtosecond laser light source, a modulator, an auxiliary alignment component, a delay scanning device and a signal collecting device;
wherein the femtosecond laser light source is used to generate a pump pulse and a Stokes pulse based on a femtosecond pulse laser;
the modulator is used to modulate a first pulse from one of the pump pulse and the Stokes pulse to obtain a modulated pulse;
the auxiliary alignment component is used to align the modulated pulse with a second pulse from the other of the pump pulse and the Stokes pulse in both temporal and spatial dimensions to obtain a stimulated Raman excitation pulse pair;
the delay scanning device is used to generate, based on the stimulated Raman excitation pulse pair, two stimulated Raman excitation pulse pairs with a relative delay, wherein the relative delay is adjustable, and the two stimulated Raman excitation pulse pairs are used to excite a sample to be tested to generate transient stimulated Raman scattering; and
the signal collecting device is used to collect emergent excitation pulse pairs that have interacted with the sample to be tested, the emergent excitation pulse pairs being obtained after the sample to be tested generates the transient stimulated Raman scattering; obtain transient stimulated Raman scattering signals based on the emergent excitation pulse pairs; and determine a Raman spectrum corresponding to the sample to be tested based on the transient stimulated Raman scattering signals.

6. The system of claim 5, further comprising a galvanometer system, wherein the galvanometer system is provided between the delay scanning device and the signal collecting device.

7. The system of claim 5, wherein the signal collecting device comprises a condenser element, a filter element, a photoelectric detection element, a lock-in amplifier and a data acquisition card;
the condenser element is used to collect the emergent excitation pulse pairs;
the filter element is used to filter out the first pulses in the emergent excitation pulse pairs;
the photoelectric detection element is used to detect light intensity signals of the second pulses in the emergent excitation pulse pairs;
the lock-in amplifier is used to perform a lock-in detection of the light intensity signal and demodulate the transient stimulated Raman scattering signals from the light intensity signal; and
the data acquisition card is used to collect the transient stimulated Raman scattering signals and determine the Raman spectrum based on the transient stimulated Raman scattering signals.

8. The system of claim 5, wherein the delay scanning device comprises an interferometer; wherein a moving arm of the interferometer comprises a delay control structure, and the delay control structure comprises a first reflection element, a second reflection element and a third reflection element;
a reflection surface of the first reflection element and a reflection surface of the second reflection element are parallel and opposite to each other, and the third reflection element is provided on a reflection light path of the second reflection element;
the first reflection element and the second reflection element are configured to rotate synchronously in a same direction; and
the third reflection element is used to deflect light beams on the reflection light path of the second reflection element and reflect it onto the second reflection element, and the light beams are output in sequence after passing through the second reflection element and the first reflection element.

9. The system of claim 8, wherein the third reflection element comprises a first reflection part and a second reflection part, and a reflection surface of the first reflection part is perpendicular to a reflection surface of the second reflection part; and the light beams on the reflection light path of the second reflection element are deflected by the first reflection part and the second reflection part in sequence and then reflected onto the second reflection element; or,
the third reflection element comprises three mutually perpendicular reflection surfaces, and the light beams on the reflection light path of the second reflection element are deflected by the three reflection surfaces in sequence and then reflected onto the second reflection element.

10. The system of claim 8, wherein a delay caused by the delay control structure to an incident light is determined based on: rotation angles of the first reflection element and second reflection element, a distance between the first reflection element and second reflection element in a propagation direction of the incident light, included angles formed by the first reflection element and the second reflection element respectively with the propagation direction of the incident light, and an offset of a rotation axis of the first reflection element relative to the propagation direction of the incident light.

11. The system of claim 10, wherein a range of the rotation angle is -1° to 4°, the distance is 40mm, the included angles are 75°, the offset is 5mm, and the delay control structure generates a delay range of 0 to 12ps for the incident light.

12. The system of claim 10, wherein the incident light is an ultrafast pulse laser or any collimated beam.

13. The system of claim 8, wherein the delay control structure further comprises a first drive device and a second drive device;
the first drive device is used to drive the first reflection element to rotate; and
the second drive device is used to drive the second reflection element to rotate.

14. The system of claim 13, further comprising: a controller, wherein the controller is connected to the first drive device and the second drive device, respectively; and
the controller is configured to control continuous rotation of the first drive device and the second drive device, to scan the rotation angles of the first reflection element and second reflection element, achieving delay scanning.

15. The system of claim 8, wherein the interferometer further comprises a beam splitter and a reference signal detection device;
the beam splitter is used to divide a target beam of the stimulated Raman excitation pulse pair obtained through the auxiliary alignment component into a first part beam and a second part beam, wherein the first part beam is transmitted along the moving arm of the interferometer, and the second part beam is transmitted along a fixed arm of the interferometer;
the beam splitter is also used to combine a beam output from the moving arm of the interferometer with a beam output from the fixed arm of the interferometer to obtain a third part beam and a fourth part beam, respectively, wherein the third part beam is used to excite the sample to be tested to generate the transient stimulated Raman scattering; and
the reference signal detection device is used to receive the fourth part beam and convert the fourth part beam into a reference signal with a coherence time greater than a preset threshold, wherein the reference signal is used to calibrate position information of the delay control structure.

16. The system of claim 15, wherein the reference signal detection device comprises a grating, a lens, a slit and a photodiode;
the fourth part beam passes through the grating, the lens and the slit in sequence to obtain the reference signal; and
the photodiode is used to detect the reference signal.

17. The system of any of claims 5 to 16, wherein the femtosecond laser light source comprises a femtosecond laser, a polarization splitter, a first light source branch and a second light source branch;
the femtosecond laser is used to generate the femtosecond pulse laser; the polarization splitter is used to divide the femtosecond pulse laser into a fifth part beam and a sixth part beam;
the first light source branch comprises a dispersion compensation device, wherein the dispersion compensation device is used to perform dispersion compensation on the fifth part beam to obtain the Stokes pulse; and
the second light source branch comprises a frequency doubler and an optical parametric oscillator, wherein the frequency doubler is used to double the sixth part beam to obtain a frequency-doubled laser; and the optical parametric oscillator is driven by the frequency-doubled laser, and outputs the pump pulse.

18. The system of claim 17, wherein the auxiliary alignment component comprises an adjustable optical delay line on the second light source branch, and a dichroic mirror on the first light source branch and the second light source branch;
the optical delay line is used to apply a delay to the pump pulse to align the pump pulse with the Stokes pulse in the temporal dimension; and
the dichroic mirror is used to align the pump pulse with the Stokes pulse in the spatial dimension.
